# FASCICULE DE BREVET EUROPEEN

(11) **EP 4 419 313 B1**
(45) Date de publication et mention de la délivrance du brevet: **20.08.2025**
(21) Numéro de dépôt: 22801847.9
(22) Date de dépôt: 14.10.2022
(51) Int. Cl.: B29C 64/364, B08B 15/04

(54) **ROSACE DE RÉPARTITION DE FLUIDE ET UTILISATION DE CELLE-CI POUR CONTRÔLER L'ATMOSPHÈRE D'UNE IMPRIMANTE 3D**
PETALOIDFLÜSSIGKEITSAUSGABEKERN UND VERWENDUNG DAVON ZUR KONTROLLE DER ATMOSPHÄRE EINES 3D-DRUCKERS
PETALOID FLUID DISPENSING CORE AND USE THEREOF FOR CONTROLLING THE ATMOSPHERE OF A 3D PRINTER

(30) Priorité: 21.10.2021 FR 2111180
(43) Date de publication de la demande: 28.08.2024
(73) Titulaire: COMPAGNIE GENERALE DES ETABLISSEMENTS MICHELIN, 63000 Clermont-Ferrand (FR)
(72) Inventeur: ROUBY, Mickael, 63040 Clermont-Ferrand Cedex 9 (FR); NAGODE, Clément, 63040 Clermont-Ferrand Cedex 9 (FR)
(74) Mandataire: M.F.P. Michelin
(86) Numéro de dépôt international: PCT/FR2022/051945
(87) Numéro de publication internationale: WO 2023/067272

(56) Documents cités:
- EP-A1- 3 147 047
- EP-A1- 3 473 442
- WO-A1-2020/104202
- US-A1- 2020 276 754
- US-A1- 2021 129 439

## Description

La présente invention concerne le domaine du contrôle des fluides, et plus particulièrement le domaine du contrôle des flux gazeux au sein d'une enceinte placée sous atmosphère contrôlée.

La présente invention concerne plus spécifiquement l'application d'un tel contrôle de fluide à l'enceinte d'une imprimante tridimensionnelle, au sein de laquelle une pièce est générée en déposant, dans une enceinte placée sous atmosphère contrôlée, un matériau d'impression en plusieurs couches successives.

Il est connu d'équiper des machines de fabrication d'une enceinte fermée associée à un système de contrôle d'atmosphère, qui permet de réguler la température et/ou la composition de l'atmosphère qui règne dans ladite enceinte. Le document US2021/129439A1 concerne un dispositif répartiteur de fluide connecté à une zone de travail afin de pouvoir injecter dans ladite zone de travail un fluide entrant, et extraire de ladite zone de travail un fluide sortant.

Toutefois, les dispositifs de contrôle d'atmosphère connus sont souvent encombrants, et généralement complexes et onéreux.

En outre, lorsque l'on souhaite maintenir une atmosphère relativement homogène dans l'enceinte, notamment s'il s'agit d'une enceinte de petit volume, il est parfois difficile d'adapter l'écoulement du fluide et de maîtriser la répartition ainsi que l'impétuosité dudit écoulement d'une manière telle que l'on assure un brassage suffisant de l'atmosphère pour homogénéiser ladite atmosphère sans pour autant perturber le processus de fabrication qui est à l'œuvre dans l'enceinte.

Les objets assignés à l'invention visent par conséquent à remédier aux inconvénients susmentionnés et proposer un nouveau dispositif répartiteur de fluide qui soit efficace tout en étant simple, robuste, compact et peu onéreux.

Les objets assignés à l'invention sont atteints au moyen d'un dispositif répartiteur de fluide destiné à être connecté à une zone de travail afin de pouvoir injecter dans ladite zone de travail un fluide entrant, et extraire de ladite zone de travail un fluide sortant, ledit dispositif répartiteur de fluide comprenant successivement, le long d'un axe central :
i) un premier étage de connexion, qui est pourvu d'une chambre d'admission, destinée à recevoir le fluide entrant qui arrive au dispositif répartiteur à destination de la zone de travail, et d'une chambre d'échappement, destinée à collecter le fluide sortant en provenance de la zone de travail pour permettre audit fluide sortant de quitter le dispositif répartiteur, lesdites chambres d'admission et d'échappement cohabitant au sein d'une première plage axiale qui est commune auxdites chambres d'admission et d'échappement, tout en étant séparées l'une de l'autre par une première structure de cloisonnement,
ii) puis un second étage de répartition, qui comporte d'une part une pluralité d'alvéoles d'injection qui communiquent toutes avec la chambre d'admission et qui sont destinées à être raccordées respectivement à plusieurs points d'injection distincts prévus dans la zone de travail, et d'autre part une pluralité d'alvéoles d'extraction qui communiquent toutes avec la chambre d'échappement et qui sont destinées à être raccordées respectivement à plusieurs points d'extraction distincts prévus dans la zone de travail, les alvéoles d'injection et les alvéoles d'extraction cohabitant au sein d'une seconde plage axiale qui est commune auxdites alvéoles d'injection et d'extraction, et lesdites alvéoles d'injection et alvéoles d'extraction étant réparties en alternance les unes avec les autres autour de l'axe central, dans une zone annulaire dite « bande d'implantation » qui longe la circonférence du second étage et au sein de laquelle lesdites alvéoles sont séparées les unes des autres par une seconde structure de cloisonnement qui subdivise ladite bande d'implantation en une succession d'autant de secteurs angulaires adjacents, qui se succèdent en azimut autour de l'axe central et qui forment ainsi une alternance de secteurs angulaires d'injection, dont chacun est occupé par une alvéole d'injection et situé en vis-à-vis d'un ou plusieurs des points d'injection de la zone de travail, et de secteurs angulaires d'extraction, dont chacun est occupé par une alvéole d'extraction et situé en vis-à-vis d'un ou plusieurs des points d'extraction de la zone de travail.

Avantageusement, le dispositif répartiteur de fluide selon l'invention permet, au moyen d'un agencement compact et simple, de multiplier les points d'injection et les points d'extraction par lesquels ledit dispositif gère l'apport et l'évacuation de fluide dans la zone de travail, tout en alternant régulièrement des zones d'injection avec des zones d'extraction, conformément à la fréquence spatiale des secteurs angulaires délimités par la seconde structure de cloisonnement, ce qui permet d'assurer une bonne répartition du fluide ainsi qu'un brassage efficace mais non violent de l'atmosphère qui baigne la zone de travail. On obtient ainsi une atmosphère homogène et bien contrôlée, sans pour autant déranger les objets qui se trouvent dans ladite zone de travail et/ou les processus de transformation qui se déroulent dans ladite zone de travail.

A ce titre, on remarquera que le fait de disposer les alvéoles, et plus particulièrement les points d'injection et les points d'extraction, en corolle dans une bande d'implantation périphérique qui entoure la zone de travail, permet d'assurer un brassage actif du fluide tout autour de la zone de travail, et donc tout autour de l'objet qui se trouve dans ladite zone de travail et que l'on souhaite maintenir sous atmosphère contrôlée, tout en ménageant une zone de travail centrale particulièrement étendue, qui correspond à tout l'espace libre qui est situé entre l'axe central et les points d'injection et d'extraction, et qui est disponible pour accueillir l'objet à fabriquer.

Par ailleurs, la disposition étagée du dispositif répartiteur selon l'axe central permet notamment de raccorder le dispositif répartiteur à la zone de travail par l'extrémité axiale du second étage dudit dispositif répartiteur, tandis que l'on effectue aisément, au niveau du premier étage, le raccordement des chambres d'admission et respectivement d'échappement à un circuit externe, en disposant les tubulures d'admission et d'échappement correspondantes selon des directions transverses à l'axe central, de sorte que ledit raccordement au circuit externe s'opère par abord latéral, sans interférer avec la zone de travail.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, un noyau comprenant, d'un seul tenant, la première structure de cloisonnement et la seconde structure de cloisonnement d'un dispositif répartiteur de fluide selon l'invention, ici selon un agencement cylindrique en rosace.
Les figures 2A, 2B et 2C sont des vues respectivement de dessous, de face, et de dessus, du noyau de la figure 1.

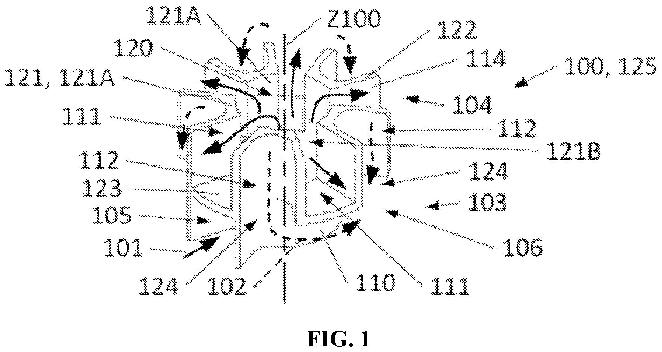

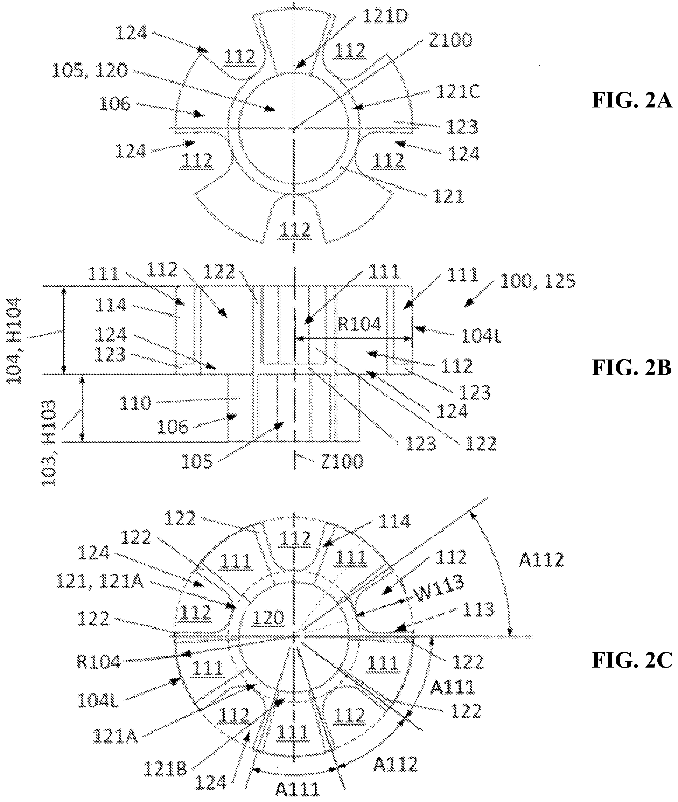

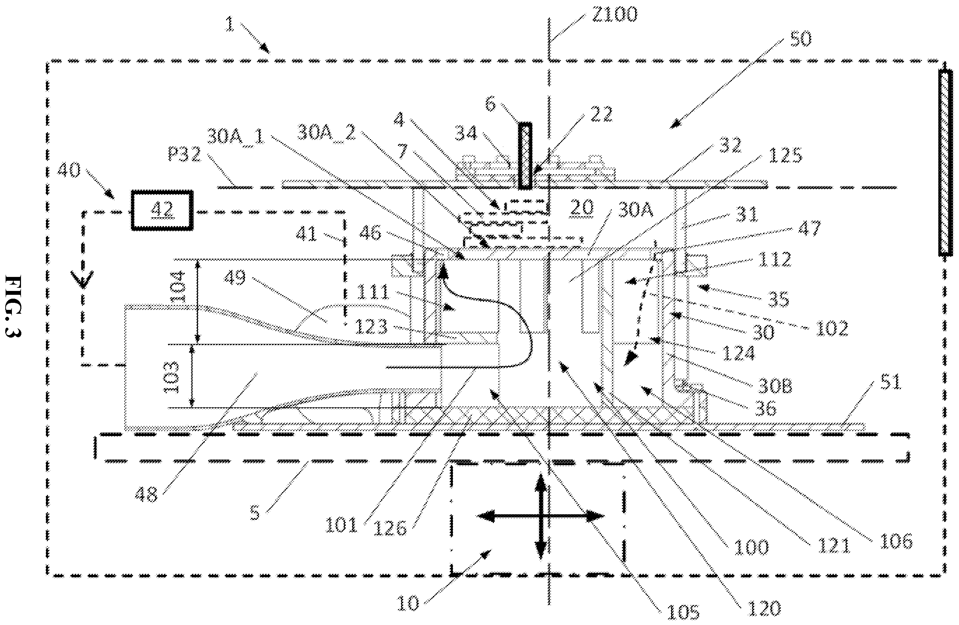

La figure 3 représente, selon une vue en coupe dans un premier plan radial contenant d'une part l'axe central et d'autre part l'axe radial d'une tubulure d'admission connectée à la chambre d'admission, une machine d'impression tridimensionnelle équipée d'un module qui comprend un dispositif répartiteur de fluide selon l'invention, lequel module est obtenu en insérant le noyau des figures 1, 2A, 2B, 2C dans un socle qui assure le cloisonnement latéral et axial des chambres et des alvéoles dudit noyau, afin de former le dispositif répartiteur, et en emboîtant de façon télescopique sur ledit socle une chemise coulissante pourvue d'un couvercle, de sorte à définir une zone de travail fermée qui correspond au volume délimité par le plateau terminal du socle, la chemise, et le couvercle.
La figure 4 représente une vue en coupe du module de la figure 3, dans un second plan radial qui contient l'axe central ainsi que l'axe radial d'une tubulure d'échappement raccordée à la chambre d'échappement.
La figure 5 représente le module des figures 3 et 4 dans un plan de coupe normal à l'axe central, ici un plan de coupe horizontal, et fait apparaître en superposition la répartition des alvéoles dans la bande d'implantation ainsi que la répartition des points d'injection et des points d'extraction correspondants à l'aplomb axial desdites alvéoles.
La figure 6 est une vue d'ensemble en perspective du module de confinement des figures 3, 4 et 5.
La figure 7 illustre, selon une vue en perspective avec arrachement de matière, une variante de module selon l'invention qui, par rapport au module de la figure 5, présente des points d'injection et des points d'extraction sous forme de rainures oblongues définissant des fente circulaires, plutôt que des points d'injection et des points d'extraction cylindriques de base circulaire.
La figure 8 est une vue du module de la figure 7 dans un plan de coupe normal à l'axe central et selon les mêmes conditions de représentation que celles utilisées pour la figure 5.

La présente invention concerne un dispositif 100 répartiteur de fluide (ci-après « dispositif répartiteur » 100) destiné à être connecté à une zone de travail 20 afin de pouvoir injecter dans ladite zone de travail 20 un fluide entrant 101, et extraire de ladite zone de travail 20 un fluide sortant 102.

Dans l'absolu, le fluide sortant 102 pourrait être distinct du fluide entrant 101, chacun desdits fluides faisant l'objet d'un circuit distinct.

Toutefois, de façon préférentielle, le fluide sortant 102 est formé au moins en partie, voire en totalité, par le fluide entrant 101, après que ledit fluide entrant 101 est passé par la zone de travail 20 ; en d'autres termes, le fluide entrant 101 forme un fluide « neuf », dont la composition et la température correspondent à celles de l'atmosphère souhaitée pour la zone de travail 20, tandis que le fluide sortant 102 correspond à ce même fluide une fois « usagé », après son passage par la zone de travail 20.

Le cas échéant le fluide sortant 102 pourra être porteur d'effluents à évacuer de la zone de travail 20, par exemple des particules ou des fumées, qui auront été générés par le processus en œuvre dans la zone de travail 20.

Par commodité de description, on pourra désigner indifféremment le fluide entrant 101 et le fluide sortant 102 par l'expression générique « le fluide » dans ce qui suit.

Le fluide 101, 102 pourra être un liquide, ou, de préférence un gaz, et plus préférentiellement un gaz inerte, tel que le diazote.

La zone de travail 20 correspond de préférence à une enceinte fermée, étanche au fluide 101, 102 utilisé.

Selon une application particulièrement préférentielle, la zone de travail 20 est une chambre de travail 20 d'une machine d'impression tridimensionnelle 1, pourvue d'une buse 6 agencée pour déposer en couches successives un matériau d'impression 7, de préférence un matériau thermoplastique, afin de générer une pièce 4 en trois dimensions dans ladite chambre de travail 20, tel que cela est illustré schématiquement sur la figure 3.

Le dispositif répartiteur de fluide 100 comprend successivement, le long d'un axe central Z100, un premier étage 103 de connexion puis un second étage 104 de répartition.

Le premier étage 103 de connexion sert d'interface de raccordement avec un circuit 40 externe au dispositif répartiteur 100, circuit externe 40 qui est chargé d'amener le fluide neuf 101 et de récupérer le fluide usagé 102. Le second étage 104 de répartition forme une interface de raccordement avec la zone de travail 20, et sert à distribuer spatialement les écoulements du fluide 101, 102 selon différents canaux qui sont situés en regard de ladite zone de travail 20, comme cela sera détaillé plus bas.

Avantageusement, l'empilement axial desdits premier et second étages 103, 104 permet de répartir les fonctions dévolues au dispositif répartiteur 100 dans un volume très compact.

Dans ce qui suit, on désignera par « axiale » une direction qui est parallèle à celle de l'axe central Z100, et par « radiale » une direction qui est perpendiculaire audit axe central Z100.

Le premier étage 103, ou « étage de connexion » 103, est pourvu d'une chambre d'admission 105, qui est destinée à recevoir le fluide entrant 101 qui arrive au dispositif répartiteur 100 à destination de la zone de travail 20, et d'une chambre d'échappement 106, qui est destinée à collecter le fluide sortant 102 en provenance de la zone de travail 20 pour permettre audit fluide sortant 102 de quitter le dispositif répartiteur 100.

A cet effet, le premier étage 103 peut recevoir une tubulure d'admission 48 raccordée à la chambre d'admission 105 et une tubulure d'échappement 49, distincte de la tubulure d'admission 48 et raccordée à la chambre d'échappement 106. Lesdites tubulures 48, 49 s'étendent de préférence transversalement à l'axe central Z100, et plus préférentiellement perpendiculairement à l'axe central Z100.

Lesdites tubulures 48, 49 sont de préférences raccordées à un même circuit 40 externe formant une boucle de recirculation 41 en circuit fermé.

Ladite boucle de recirculation 41 permet avantageusement de reconditionner le fluide usagé 102, par exemple en le réchauffant et/ou en le filtrant, afin de pouvoir réutiliser ledit fluide usagé 102 issu de la zone de travail 20 en tant que fluide neuf 101 réinjecté dans cette même zone de travail 20.

De préférence, la boucle de recirculation 41 comprend un appareil chauffant 42, tel qu'un tube chauffant en céramique pourvu de résistances électriques chauffantes, à travers lequel le fluide 101, 102, captif de la boucle de recirculation 41, circule pour se réchauffer.

Au premier étage 103, la chambre d'admission 105 et la chambre d'échappement 106 cohabitent au sein d'une première plage axiale H103 qui est commune auxdites chambres d'admission 105 et d'échappement 106, tout en étant séparées l'une de l'autre par une première structure de cloisonnement 110.

Le fait que les deux chambres 105, 106 partagent une même plage axiale H103 permet de conférer au premier étage 103 une structure très compacte.

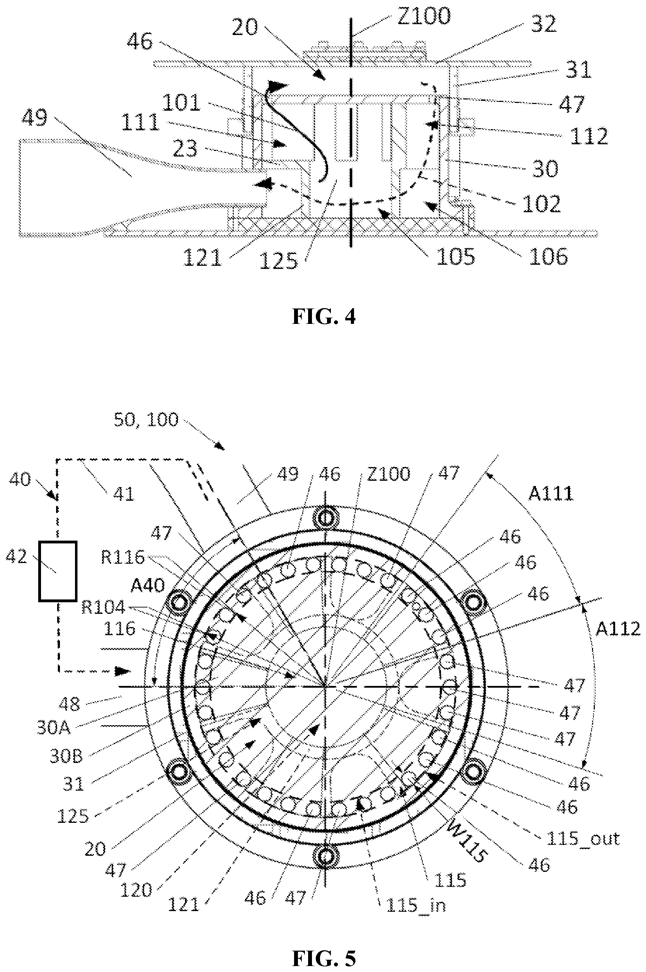

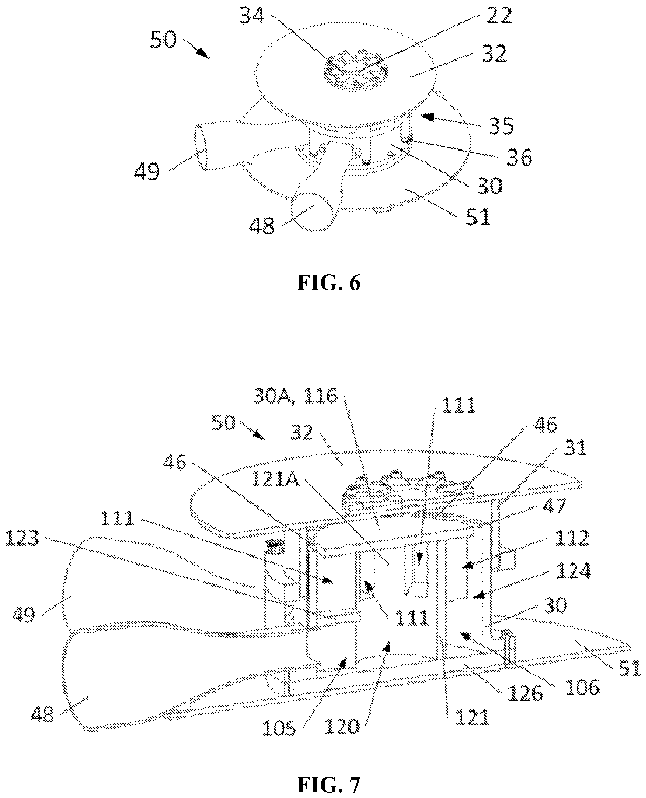

Un tel agencement permet notamment de positionner les tubulures d'admission 48 et d'échappement 49 dans cette même première plage axiale H103, selon une disposition transverse, et de préférence radiale, par rapport à l'axe central Z100, et plus particulièrement selon deux directions radiales sécantes, qui présentent entre elles, en azimut autour de l'axe central Z100, un angle d'ouverture A40 non nul et de préférence compris entre 60 degrés et 90 degrés, tel que cela est visible sur les figures 5 et 6.

Un tel agencement permet en outre, comme on le verra par la suite, une optimisation du comportement thermique du dispositif répartiteur 100.

Bien entendu, la première structure de cloisonnement 110 est étanche au fluide 101, 102 utilisé, dans les plages de température et de pression auxquelles est utilisé le dispositif répartiteur 100.

Le second étage 104, ou « étage de répartition » 104, comporte quant à lui d'une part une pluralité d'alvéoles d'injection 111 qui communiquent toutes avec la chambre d'admission 105 et qui sont destinées à être raccordées respectivement à plusieurs points d'injection 46 distincts prévus dans la zone de travail 20, et d'autre part une pluralité d'alvéoles d'extraction 112 qui communiquent toutes avec la chambre d'échappement 106 et qui sont destinées à être raccordées respectivement à plusieurs points d'extraction 47 distincts prévus dans la zone de travail 20. On notera que, ici, les points d'extraction 47 sont à la fois distincts entre eux et distincts des points d'injection 46.

Les alvéoles d'injection 111 et les alvéoles d'extraction 112 cohabitent au sein d'une seconde plage axiale H104 qui est commune auxdites alvéoles d'injection 111 et d'extraction 112, et lesdites alvéoles d'injection 111 et alvéoles d'extraction 112 sont réparties en alternance les unes avec les autres autour de l'axe central Z100, dans une zone annulaire 113 dite « bande d'implantation » 113, représentée en pointillés sur la figure 2C, bande d'implantation 113 qui longe la circonférence 104L du second étage 104 et au sein de laquelle lesdites alvéoles 111, 112 sont séparées les unes des autres par une seconde structure de cloisonnement 114.

Tel que cela est bien visible sur la figure 2C, ladite seconde structure de cloisonnement 114 subdivise ladite bande d'implantation 113 en une succession d'autant de secteurs angulaires A111, A112 adjacents, c'est-à-dire d'autant de secteurs angulaires adjacents distincts qu'il y a au total d'alvéoles 111, 112 en comptant les alvéoles d'injection 111 et les alvéoles d'extraction 112. Ces secteurs angulaires A111, A112 adjacents se succèdent en azimut autour de l'axe central Z100, et forment ainsi une alternance de secteurs angulaires d'injection A111, dont chacun est occupé par une alvéole d'injection 111 et situé en vis-à-vis d'un ou plusieurs des points d'injection 46 de la zone de travail 20, et de secteurs angulaires d'extraction A112, dont chacun est occupé par une alvéole d'extraction 112 et situé en vis-à-vis d'un ou plusieurs des points d'extraction 47 de la zone de travail 20, tel que cela est visible sur la figure 5.

Ainsi, lorsqu'on parcourt la bande d'implantation 113 le long de la circonférence 104L du second étage 4, en tournant en azimut autour de l'axe central Z100, on rencontre successivement un secteur angulaire d'injection A111, puis un secteur angulaire d'extraction A112, puis de nouveau un secteur angulaire d'injection A111, puis un secteur angulaire d'extraction A112, et ainsi de suite.

Le dispositif répartiteur 100 comprendra de préférence autant d'alvéoles d'injection 111, et donc de secteurs angulaires d'injection A111, que d'alvéoles d'extraction 112, et donc de secteurs angulaires d'extraction A112.

De préférence, le dispositif répartiteur 100 comprendra entre 3 et 12 alvéoles d'injection 111, plus préférentiellement entre 4 et 7 alvéoles d'injection 111, par exemple 5 alvéoles d'injection 111 comme illustré sur les figures 2C et 5, et autant d'alvéoles d'extraction 112 correspondantes.

De préférence, tous les secteurs angulaires d'injection A111 présentent la même couverture angulaire individuelle, et de même, tous les secteurs angulaires d'extraction A112 présentent la même couverture angulaire individuelle, de préférence égale à celle des secteurs angulaires d'injection A111.

En outre, le cumul des secteurs angulaires d'injection A111 et des secteurs angulaires d'extraction A112 couvre de préférence la totalité du pourtour du second étage 104, sur 360 degrés autour de l'axe central Z100.

De préférence, en projection dans un plan normal à l'axe central Z100, le second étage 104 présente une invariance par rotation d'ordre N, où N est le nombre entier d'alvéoles d'injection 111, égal au nombre entier d'alvéoles d'extraction 112 (et valant ici 5, sur les figures 1 et 5).

De préférence, les alvéoles d'injection 111 ne chevauchent pas les alvéoles d'extraction 112 selon la direction circonférentielle qui suit le contour 104L du second étage, c'est-à-dire que la couverture azimutale des secteurs angulaires d'injection A111 n'empiète pas sur la couverture azimutale des secteurs angulaires d'extraction A112.

Selon une possibilité de réalisation, tel que cela est visible sur la figure 5, chaque alvéole d'injection 111 desservira plusieurs points d'injection 46, par exemple deux à quatre points d'injection 46, et plus préférentiellement trois points d'injection. De même, respectivement, chaque alvéole d'extraction 112 desservira de préférence plusieurs points d'extraction 47, par exemple deux à quatre points d'extraction 47, et plus préférentiellement trois points d'extraction 47. Ceci pourra notamment s'appliquer avantageusement lorsque les points d'injection 46, respectivement les points d'extraction 47, sont formés par des trous cylindriques de base circulaire, comme cela est illustré sur la figure 5.

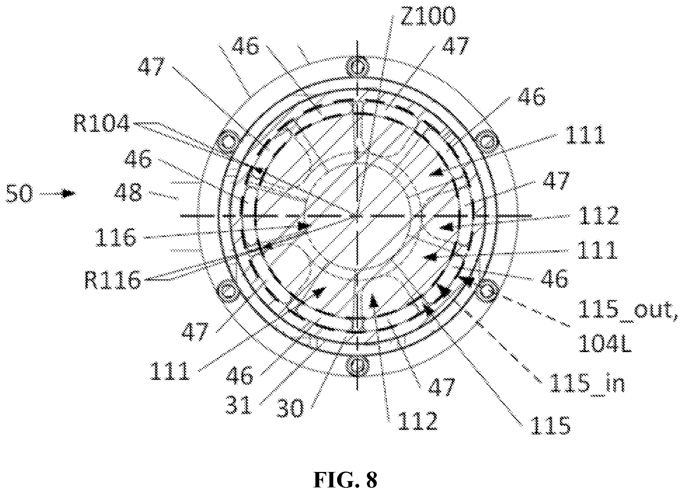

Selon une autre possibilité de réalisation, les points d'injection 46, respectivement les points d'extraction 47, pourront être formés par des rainures oblongues qui forment des fentes en arcs de cercle, centrées sur l'axe central Z100, comme cela est illustré sur les figures 7 et 8. Selon un tel agencement, chaque alvéole d'injection 111 pourra desservir une seule fente d'injection, et chaque alvéole d'extraction 112 pourra desservir une seule fente d'extraction, chaque fente occupant de préférence en azimut autour de l'axe central Z100 au moins la moitié, et de préférence sensiblement la totalité, de la couverture angulaire du secteur angulaire A111, A112 auquel ladite fente est affectée.

Avantageusement, dans tous les cas, c'est-à-dire quelle que soit la forme, circulaire ou oblongue, des points d'injection 46, respectivement des points d'extraction 47, l'invention offre, sur un même tour en azimut autour de l'axe central Z100, une multiplicité de points d'injection 46, alimentés par une multiplicité d'alvéoles d'injection 111 correspondantes, et une multiplicité de points d'extraction 47, connectés à une multiplicité d'alvéoles d'extraction 112 correspondantes, ce qui permet de répartir la circulation du fluide 101, 102 en autant de canaux, sur tout le pourtour du second étage 104, et donc sur tout le pourtour de la zone de travail 20, tout en alternant de façon régulière entre zones d'injection d'une part, qui correspondent aux secteurs angulaires d'injection A111, et zones d'extraction d'autre part, qui correspondent aux secteurs angulaires d'extraction A112.

Dans la première variante correspondant à la figure 5, chaque zone d'injection groupera de préférence plusieurs points d'injection 46 successifs (ici trois points d'injection 46) affectés à une même alvéole d'injection 111, tandis que chaque zone d'extraction groupera plusieurs points d'extraction 47 successifs (ici trois points d'extraction 47) affectés à une même alvéole d'extraction 112. Dans la seconde variante correspondant aux figures 7 et 8, chaque zone d'injection comprendra de préférence une fente d'injection unique, tandis que chaque zone d'extraction comprendra une fente d'extraction unique.

La multiplicité et la répartition équilibrée des alvéoles d'injection 111, respectivement des alvéoles d'extraction 112 tout autour de l'axe central Z100, et donc la multiplicité et la répartition correspondantes, par individu ou en sous-groupes, des points d'injection 46 associés, respectivement des points d'extraction 47 associés, garantissent avantageusement l'efficacité et l'homogénéité de la circulation du fluide 101, 102 dans la zone de travail 20.

En outre, l'agencement proposé par l'invention permet de positionner les points d'injection 46 et les points d'extraction 47 dans une zone périphérique 115 relativement étroite, au voisinage de la circonférence 104L du second étage, et plus globalement au voisinage de la limite radiale de la zone de travail 20.

Ceci permet de dégager une importante zone centrale 116, disponible pour recevoir la pièce 4 qui est en cours de fabrication. Ladite zone centrale 116 correspond en effet à l'espace, ici la surface de disque sur la figure 5, qui s'étend de l'axe central Z100 jusqu'à la limite radialement interne de la zone périphérique 115 qui entoure ladite zone centrale 116.

A titre indicatif, la zone périphérique 115, à l'intérieur de laquelle se situent tous les points d'injection 46 et d'extraction 47, présente de préférence une largeur W115, considérée radialement à l'axe central Z100, qui est inférieure ou égale à 30%, plus préférentiellement inférieure ou égale à 20%, et par exemple comprise entre 5% et 15%, de la distance R104 qui sépare l'axe central Z100 de la circonférence 104L du second étage 104 selon la direction radiale considérée. Ainsi, de manière équivalente, l'étendue radiale (ou, par analogie en référence à une géométrie circulaire, « le rayon ») R116 de la zone centrale 116 selon la direction radiale considérée représentera au moins 70% (= 100% - 30% ci-dessus), de préférence au moins 80% (= 100% - 20% ci-dessus), et plus préférentiellement entre 85% (= 100% - 15% ci-dessus) et 95% (= 100% - 5% ci-dessus) de l'étendue radiale R104 du second étage 104 dans la direction radiale considérée.

De préférence, dans un plan normal à l'axe central Z100, le tracé de la circonférence 104L du second étage 104, dit « tracé de base », et donc le tracé de la bande d'implantation 113, et par conséquent les tracés respectifs des limites radiales de la zone de travail 20, de la zone périphérique 115 et de la zone centrale 116 emboîtés concentriquement les uns dans les autres, présenteront une forme circulaire, centrée sur l'axe central Z100.

Bien entendu, il est parfaitement envisageable, en variante, que ces tracés présentent des formes polygonales, de préférence identiques dans leur forme d'un tracé à l'autre, telles que par exemple des formes rectangulaires, carrées, hexagonales, décagonales ou autres, et notamment des formes polygonales régulières qui présenteraient par exemple autant de côtés, égaux, que le dispositif répartiteur 100 compte d'alvéoles 111, 112 au total.

De préférence, tel que cela est bien visible sur les figures 1, 2A, 2C et 3, la chambre d'admission 105 forme un puits central 120 qui s'étend depuis le premier étage 103 jusqu'au second étage 104 et qui est délimité, autour de l'axe central Z100, par une paroi latérale 121 qui, au premier étage 103, forme une partie de la première structure de cloisonnement 110 séparant la chambre d'admission 105 de la chambre d'échappement 106, et, au second étage 104, forme une partie de la seconde structure de cloisonnement 114.

De préférence, au second étage 104, ladite paroi latérale 121 dudit puits central 120 s'ouvre sur chacun des secteurs angulaires d'injection A111 afin d'alimenter en fluide entrant 101 chacune des alvéoles d'injection 111, qui sont réparties en étoile autour dudit puits central 121.

Avantageusement, on peut ainsi acheminer de façon simple et efficace le fluide entrant 101 du premier étage 103 jusqu'au second étage 104, selon un flux axial, au moyen d'un seul et même canal central formé par le puits central 120, puis répartir ensuite ledit fluide entrant 101 depuis ledit canal central jusque dans les différentes alvéoles d'injection 111, qui forment une ramification dudit canal central en plusieurs canaux périphériques, en redirigeant le fluide selon autant de flux radiaux centrifuges.

Au second étage 104, la paroi latérale 121 du puits central 120 présente de préférence une forme globalement cylindrique qui s'étend axialement sur toute la seconde plage axiale H104 et dont les génératrices sont parallèles à l'axe central Z100.

Audit second étage 104, ladite paroi latérale 121 alterne d'une part des portions pleines 121A, qui masquent les secteurs angulaires d'extraction A112 afin de séparer le puits central 120 des alvéoles d'extraction 112, avec d'autre part des portions d'interruption 121B, qui s'étendent sur les secteurs angulaires d'injection A111 pour former autant d'ouvertures par lesquelles le puits central 120 peut déverser le fluide entrant 101 dans les alvéoles d'injection 111.

Par commodité de réalisation et pour maximiser la section de passage des canaux ainsi formés afin de garantir l'efficacité des transferts de fluide entrant 101, les portions d'interruption 121B sont de préférence vides de matière axialement sur au moins 75%, de préférence sur au moins 80%, voire sensiblement sur la totalité de la seconde plage axiale H104, et donc ici sur toute la hauteur axiale des alvéoles d'injection 111, et circonférentiellement sur tout l'angle couvert en azimut autour de l'axe central Z100 par le secteur angulaire d'injection A111 considéré.

Au premier étage 103, la paroi latérale 121 présente une portion pleine 121C qui couvre de préférence, en azimut autour de l'axe central Z100, un secteur angulaire qui correspond à, et qui, en projection dans un plan normal à l'axe central Z100 se superpose avec, l'étendue cumulée de la totalité des secteurs angulaires d'injection A111 et d'extraction A112 du second étage 104, à l'exception d'un seul secteur angulaire d'injection A111, à l'aplomb axial duquel se situe une portion d'interruption 121D qui est dévolue à la mise en communication de la chambre d'admission 105 avec la tubulure d'admission 48.

Ici encore, lesdites portions pleine 121C et d'interruption 121D s'étendent avantageusement sur toute la première plage axiale H103, et donc sur toute la hauteur axiale de la chambre d'admission 105.

Avantageusement, la chambre d'admission 105 peut ainsi occuper une position centrale par rapport à l'axe central Z100, protégée de l'extérieur du dispositif répartiteur 100 par la chambre d'échappement 106, périphérique, qui entoure ladite chambre d'admission 105 sur une portion significative de la circonférence de ladite chambre d'admission 105 autour de l'axe central Z100.

Un tel agencement est notamment particulièrement avantageux d'un point de vue thermique, lorsque l'on utilise un fluide entrant 101 présentant une température entrante qui est différente de, par exemple supérieure à, la température ambiante qui règne à l'extérieur du dispositif de répartition 100, et que l'on recueille dans la chambre d'échappement 106 un fluide sortant 102 qui présente une température intermédiaire entre la température entrante et la température ambiante. En effet, la chambre d'échappement 106 joue alors le rôle d'une zone tampon périphérique qui protège la chambre d'admission 105 centrale des transferts thermiques avec l'extérieur. Dans l'exemple plus spécifiquement choisi, la présence de la chambre d'échappement 106 « tiède » limite ainsi les déperditions de chaleur de la chambre d'admission 105 « chaude » vers l'extérieur « froid ».

De préférence, au premier étage 103, la chambre d'échappement 106 peut entourer la chambre d'admission 105 sur au moins 180 degrés, voire au moins 270 degrés autour de l'axe central Z100.

A titre indicatif, cette couverture autour de l'axe central Z100 pourra être comprise entre 180 degrés et 330 degrés.

Tel que cela est bien visible sur les figures 1 et 2C, au second étage 104, la seconde structure de cloisonnement 114 comprend, en sus des portions pleines 121A de la paroi latérale 121 du puits central 120, des cloisons radiales 122 qui forment chacune une cloison mitoyenne entre une alvéole d'injection 111 et une alvéole d'extraction 112 adjacente. Ainsi, chaque cloison radiale 122 matérialise la limite entre un secteur angulaire d'injection A111 et le secteur angulaire d'extraction A112 qui précède ou qui suit immédiatement ledit secteur angulaire d'injection A111.

Chaque cloison radiale 122 s'étend de préférence de façon pleine et continue sur toute la largeur radiale W113 de la bande d'implantation 113, et en hauteur sur toute la seconde plage axiale H104.

Par ailleurs, la seconde structure de cloisonnement 114 comprend de préférence, tel que cela est visible notamment sur les figures 1, 3 et 4, un plancher 123 qui marque la limite entre le premier étage 103 et le second étage 104.

Ce plancher 123 s'étend de préférence parallèlement à un plan normal à l'axe central Z100.

Le plancher 123 sépare ainsi avantageusement les alvéoles, d'injection 111 et respectivement d'extraction 112, d'une part qui s'étendent d'un côté, ici au-dessus, dudit plancher 123, des chambres d'admission 105, respectivement d'échappement 106, d'autre part, qui s'étendent de l'autre côté dudit plancher 123.

Au premier étage 103, la chambre d'échappement 106 s'étend de préférence autour du puits central 120, à l'aplomb axial de la bande d'implantation 113 des alvéoles d'injection 111 et des alvéoles d'extraction 112 du second étage 104, et sur une étendue azimutale autour de l'axe central Z100 qui permet à ladite chambre d'échappement 106 de couvrir tous les secteurs angulaires d'extraction A112, avec lesquels ladite chambre d'échappement 106 communique au moyen de découpes 124 qui sont pratiquées dans le plancher 123 dans chacun des secteurs angulaires d'extraction A112.

En d'autres termes, le plancher 123 est de préférence interrompu dans les secteurs angulaires d'extraction A112, par les découpes 124, de sorte à mettre en communication directe les alvéoles d'extraction 112 avec la chambre d'échappement 106 sous-jacente, ce qui permet d'assurer une collecte et une évacuation efficaces du fluide sortant 102, au moyen d'une structure compacte.

Le dispositif 100 présente ainsi en effet un collecteur d'échappement au sein duquel les multiples canaux d'extraction axiaux formés par les alvéoles d'extraction 112 se rejoignent former un canal principal unique, qui couvre autour de l'axe central Z100 une portion d'anneau correspondant à la chambre d'échappement 106.

De préférence, par commodité de fabrication et pour maximiser la section de passage des canaux ainsi formés, les découpes 124 s'étendent sur toute la surface du plancher 123 qui est comprise entre les deux cloisons radiales 122 successives et la portion pleine 121A de la paroi latérale 121 du puits central 120, qui délimitent le secteur angulaire d'extraction A112 considéré, tel que cela est bien visible sur la figure 1.

Selon une caractéristique particulièrement préférentielle, la première structure de cloisonnement 110 et la seconde structure de cloisonnement 114 sont formées d'un seul tenant l'une avec l'autre.

On obtient ainsi une structure particulièrement simple et robuste, qui regroupe en une seule pièce le plancher 123, la paroi latérale 121 du puits central 120 qui traverse ledit plancher 123 et s'étend de part et d'autre axialement dudit plancher, et les cloisons radiales 122 qui délimitent les secteurs angulaires A111, A112 affectés aux différentes alvéoles 111, 112.

Une telle pièce pourra être réalisée en acier, dans un alliage d'aluminium, en céramique, ou dans un plastique résistant aux températures de service du dispositif 100, par exemple en PEEK (poly-éther-éther-cétone). On notera qu'il pourra être intéressant d'utiliser un matériau, notamment un plastique, dit « thermiquement isolant », en ceci que ledit matériau présente une conductivité thermique inférieure à celle de l'acier ou de l'aluminium, et ce afin de limiter les transferts thermiques entre la chambre d'admission 105 et la chambre d'échappement 106, et plus globalement entre le fluide entrant 101 et le fluide sortant 102. Quel que soit son matériau constitutif, une telle pièce d'un seul tenant pourra être obtenue par exemple par moulage ou par usinage.

Selon une possibilité de réalisation préférentielle, le dispositif répartiteur de fluide 100 comporte un noyau 125 qui comprend, de préférence d'un seul tenant comme indiqué ci-dessus, la première structure de cloisonnement 110 et la seconde structure de cloisonnement 114.

De préférence, notamment par commodité de fabrication, les alvéoles 111, 112 dudit noyau 125 s'ouvrent sur la circonférence 104L du second étage 104, c'est-à-dire sur la limite radialement externe du noyau 125, et forment de préférence, au vu du sens d'ouverture des secteurs angulaires A111, A112 correspondant, des alvéoles concaves par rapport à l'axe central Z100.

Par commodité de fabrication et d'assemblage, le noyau 125 sera avantageusement inscriptible dans une forme tronconique de base circulaire et centrée sur l'axe central Z100, ou plus préférentiellement dans une forme cylindrique droite de base circulaire et centrée sur l'axe central Z100.

Avantageusement, le noyau 125 est inséré dans un socle 30 creux qui comporte d'une part un fût 30B qui coopère de façon étanche avec le noyau 125 afin de former, tout autour de l'axe central Z100, une paroi latérale qui marque la limite radialement externe des chambres d'admission 105 et d'échappement 106 du premier étage 103, et des alvéoles d'injection 111 et d'extraction 112 du second étage 104, et d'autre part un plateau terminal 30A, normal à l'axe central Z100, dont une première face 30A_1 coopère en contact étanche avec l'extrémité axiale de la seconde structure de cloisonnement 114 qui se situe axialement à l'opposé du premier étage 103, de sorte à former la limite axiale des alvéoles d'injection 111 et d'extraction 112, et dont une seconde face 30A_2, axialement opposée, forme une paroi de la zone de travail 20, de préférence une face de réception horizontale sur laquelle viendra reposer la pièce 4 en cours de fabrication.

Le socle 30 recouvre donc le noyau 125 de sorte à compléter les structures de cloisonnement 110, 114 pour fermer les contours des sections de passage des canaux formés par les alvéoles 111, 112 et les chambres 105, 106.

L'extrémité axiale du noyau 125 située du côté du premier étage 103, et donc la base des chambres 105, 106, peut avantageusement être obturée de façon étanche par un bouchon 126, ici formé par un disque normal à l'axe central Z100, qui vient fermer la base du socle 30.

Avantageusement, la structure modulaire ainsi proposée simplifie l'assemblage du dispositif 100 ainsi que son démontage pour nettoyage.

De préférence, le plateau terminal 30A présente, en vis-à-vis des alvéoles 111, 112, une pluralité de trous qui traversent axialement ledit plateau terminal depuis la première face 30A_1 jusqu'à la seconde face 30A_2 afin de former, sur la seconde face 30A_2, les points d'injection 46 et les points d'extraction 47 de la zone de travail 20.

On assure ainsi un transfert rapide et efficace du fluide 101, 102 entre le dispositif 100 et la zone de travail 20, au moyen d'un agencement très simple du dispositif 100.

Comme indiqué plus haut, ces trous peuvent prendre la forme de trous cylindriques de base circulaire, ou bien encore, pour maximiser la section de passage des canaux d'injection, respectivement des canaux d'extraction, pour une superficie donnée de la zone centrale 116, prendre la forme de rainures oblongues et arquées formant des fentes en arcs de cercle.

De préférence, les points d'injection 46 et les points d'extraction 47 de la zone de travail 20 se situent dans une zone périphérique 115 du plateau terminal 30A qui est comprise, en projection dans un plan normal à l'axe central Z100, entre une limite radialement externe 115_out qui correspond au bord latéral du noyau 125, considéré selon une direction radiale à l'axe central Z100, et une limite radialement interne 115_in située à une distance, considérée selon la même direction radiale, qui est égale ou supérieure à 70%, de préférence égale ou supérieure à 80%, et par exemple comprise entre 85% et 95%, de la distance, ici R104, qui sépare ledit bord latéral du noyau 125 dudit axe central Z100.

La zone périphérique 115 correspondra ainsi à une bande annulaire périphérique dont la largeur W115 représente, comme indiqué plus haut, moins de 30%, de préférence moins de 20%, et plus préférentiellement entre 5% et 15% de la distance R104 qui sépare radialement l'axe central Z100 de la circonférence 104L du second étage 104.

Le plateau terminal 30A offrira ainsi une large zone centrale 116 pleine pour recevoir la pièce 4 en cours de fabrication.

On notera que, de préférence, la zone périphérique 115 est, en projection dans un plan normal à l'axe central Z100, contenue dans la bande d'implantation 113 sous-jacente, qui présente une largeur W113 égale ou supérieure à la largeur W115 de la zone périphérique, notamment afin d'assurer le transfert radial, via les alvéoles d'injection 111, du fluide entrant 101 depuis le puits central 120 jusqu'aux trous formant les points d'injection 46.

De préférence, tous les trous formant les points d'injection 46 présentent le même diamètre. De même, tous les trous formant les points d'extraction 47 présentent de préférence le même diamètre, préférentiellement égal au diamètre des trous formant les points d'injection 46. De même, si l'on utilise des fentes en arc de cercle pour former les points d'injection 46, respectivement les points d'extraction 47, lesdites fentes présenteront de préférence toutes la même largeur radiale. A titre indicatif, le diamètre desdits trous, respectivement la largeur radiale des fentes, et donc plus globalement la largeur radiale des points d'injection 46, respectivement des points d'extraction 47, représente de préférence entre 3% et 10% du diamètre hors-tout du noyau 125, ce qui permet de limiter la largeur W115 de la zone périphérique 115, et donc de maximiser l'étendue radiale de la zone centrale 116.

En outre, de préférence, les points d'injection 46 et les points d'extraction 47 se situent de préférence tous à la même distance radiale du bord latéral du noyau 125, et par conséquent, dans le cas d'un agencement circulaire du noyau 125, se situent tous à la même distance de l'axe central Z100. La distance considérée est par exemple ici la distance du centre des trous par rapport à l'axe central Z100 pour des trous circulaires, ou la distance de la ligne centrale des rainures oblongues par rapport à l'axe central Z100 dans le cas de fentes en arc de cercle.

L'invention porte également sur un module 50 de confinement destiné à délimiter une zone de travail 20 et à placer ladite zone de travail 20 sous une atmosphère contrôlée.

Ledit module 50 comprend un dispositif répartiteur de fluide 100 tel que décrit dans ce qui précède, ainsi qu'une chemise 31 qui forme un anneau fermé autour de l'axe central Z100 et qui s'étend axialement en saillie à partir du plateau terminal 30A du socle 30, ainsi qu'un couvercle 32 qui ferme la chemise 31 à l'opposé axialement du plateau terminal 30A du socle, de sorte à former une cavité fermée qui est délimitée par la chemise 31, par le couvercle 32 et par le plateau terminal 30A du socle et qui forme la zone de travail 20.

La chemise 31 forme ainsi une paroi latérale qui délimite radialement la cavité formant la zone travail 20, tandis que le couvercle 32 et plateau terminal 30A forment les parois extrémales qui limitent axialement ladite cavité formant la zone de travail 20.

De préférence, l'axe central Z100 est vertical, de sorte que le plateau terminal 30A forme le fond horizontal de la cavité, qui supporte la pièce 4 pendant la fabrication de celle-ci.

Avantageusement, l'atmosphère de la zone de travail 20 est contrôlable, et donc avantageusement contrôlée lors de l'utilisation du module 50, en créant dans la cavité susmentionnée une circulation d'un fluide 101, 102 gazeux qui est injecté dans ladite cavité par les points d'injection 46 prévus dans le socle 30 puis évacué de ladite cavité par les points d'extraction 47 prévus dans le socle 30.

On notera à ce titre que les points d'injection 46 et d'extraction 47 se trouvent en pratique à proximité de la paroi de la chemise 31, de sorte les mouvements de fluide 101, 102 qui génère le brassage de l'atmosphère sont également localisés le long de la paroi de la chemise 31, et plus préférentiellement orientés axialement en sortie des points d'injection 46 et en entrée des points d'extraction 47, de sorte que ces mouvements de fluide 101, 102 ne perturbent pas les activités qui prennent place dans la zone centrale 116 du plateau terminal 30A, où se trouve typiquement la pièce 4 en cours de fabrication.

De préférence, la chemise 31 est emboîtée sur le fût 30 du module 50 et montée coulissante par rapport audit fût 30 selon l'axe central Z100, de manière à pouvoir saillir axialement par rapport au plateau terminal 30A de façon télescopique.

Avantageusement, une telle structure télescopique 35 permet d'adapter la taille de la cavité formant la zone de travail 20, et plus particulièrement d'adapter la hauteur de ladite cavité, c'est-à-dire la distance qui sépare axialement le plateau terminal 30A du couvercle 32, tout en conservant l'étanchéité procurée par la chemise 31, au fur et à mesure que le plateau terminal 30A s'abaisse verticalement pour accompagner l'empilement des couches du matériau d'impression 7.

La chemise 31 est de préférence pressée axialement de façon étanche contre le couvercle 32 par un ou plusieurs ressorts 36 de rappel.

L'invention concerne enfin en tant que telle une machine 1 d'impression tridimensionnelle qui comprend une zone de travail 20, une buse 6 d'injection pour déposer un matériau d'impression 7 en couches successives dans ladite zone de travail 20 pour fabriquer une pièce 4, et un dispositif 100 répartiteur de fluide selon l'une quelconque des caractéristiques ci-dessus pour contrôler l'atmosphère de ladite zone de travail 20.

Plus préférentiellement, l'invention concerne une machine 1 d'impression tridimensionnelle qui, tel que cela est visible sur la figure 3, comprend un module 50 de confinement tel que décrit ci-dessus, ainsi qu'une buse 6 d'injection qui traverse le couvercle 32 du module 50 à travers un orifice d'insertion 22 prévu à cet effet dans ledit couvercle 32, et qui est agencée pour déposer un matériau d'impression 7 en couches successives dans la cavité du module 50 formant la zone de travail 20 afin de générer une pièce 4 dans ladite cavité.

L'axe central Z100 du module 50 correspond ici de préférence à l'axe vertical de la machine 1.

Le module 50 peut avantageusement être fixé au moyen d'une embase 51 sur un plateau principal 5 de la machine 1, lequel plateau principal 5 est mobile verticalement et horizontalement et placé sous le contrôle d'un système d'entraînement 10 qui permet de créer un mouvement relatif du plateau principal 5, et donc de la zone de travail 20, par rapport à la buse 6, afin de dessiner la forme de la pièce 4.

Le couvercle 32 repose de préférence en appui glissant contre le chant supérieur de la chemise 31, selon un plan horizontal P32, afin d'accommoder les déplacements horizontaux du plateau principal 5. La buse 6 est quant à elle fixée audit couvercle par un mécanisme de bridage 34.

## Revendications

1. Dispositif (100) répartiteur de fluide destiné à être connecté à une zone de travail (20) afin de pouvoir injecter dans ladite zone de travail (20) un fluide entrant (101), et extraire de ladite zone de travail (20) un fluide sortant (102), ledit dispositif répartiteur de fluide comprenant successivement, le long d'un axe central (Z100) :
i) un premier étage (103) de connexion, qui est pourvu d'une chambre d'admission (105), destinée à recevoir le fluide entrant (101) qui arrive au dispositif (100) répartiteur à destination de la zone de travail (20), et d'une chambre d'échappement (106), destinée à collecter le fluide sortant (102) en provenance de la zone de travail (20) pour permettre audit fluide sortant (102) de quitter le dispositif répartiteur (100), lesdites chambres d'admission (105) et d'échappement (106) cohabitant au sein d'une première plage axiale (H103) qui est commune auxdites chambres d'admission et d'échappement (105, 106), tout en étant séparées l'une de l'autre par une première structure de cloisonnement (110),
ii) puis un second étage (104) de répartition, qui comporte d'une part une pluralité d'alvéoles d'injection (111) qui communiquent toutes avec la chambre d'admission (105) et qui sont destinées à être raccordées respectivement à plusieurs points d'injection (46) distincts prévus dans la zone de travail (20), et d'autre part une pluralité d'alvéoles d'extraction (112) qui communiquent toutes avec la chambre d'échappement (106) et qui sont destinées à être raccordées respectivement à plusieurs points d'extraction (47) distincts prévus dans la zone de travail, les alvéoles d'injection (111) et les alvéoles d'extraction (112) cohabitant au sein d'une seconde plage axiale (H104) qui est commune auxdites alvéoles d'injection et d'extraction, et lesdites alvéoles d'injection (111) et alvéoles d'extraction (112) étant réparties en alternance les unes avec les autres autour de l'axe central (Z100), dans une zone annulaire (113) dite « bande d'implantation » (113) qui longe la circonférence (104L) du second étage (104) et au sein de laquelle lesdites alvéoles (111, 112) sont séparées les unes des autres par une seconde structure de cloisonnement (114) qui subdivise ladite bande d'implantation (113) en une succession d'autant de secteurs angulaires (A111, A112) adjacents, qui se succèdent en azimut autour de l'axe central (Z100) et qui forment ainsi une alternance de secteurs angulaires d'injection (A111), dont chacun est occupé par une alvéole d'injection (111) et situé en vis-à-vis d'un ou plusieurs des points d'injection (46) de la zone de travail (20), et de secteurs angulaires d'extraction (A112), dont chacun est occupé par une alvéole d'extraction (112) et situé en vis-à-vis d'un ou plusieurs des points d'extraction (47) de la zone de travail (20).

2. Dispositif selon la revendication 1 **caractérisé en ce que** la première structure de cloisonnement (110) et la seconde structure de cloisonnement (114) sont formées d'un seul tenant l'une avec l'autre.

3. Dispositif selon la revendication 1 ou 2 **caractérisé en ce que** la chambre d'admission (105) forme un puits central (120) qui s'étend depuis le premier étage (103) jusqu'au second étage (104) et qui est délimité, autour de l'axe central (Z100), par une paroi latérale (121) qui, au premier étage (103), forme une partie de la première structure de cloisonnement (110) séparant la chambre d'admission (105) de la chambre d'échappement (106), et, au second étage (104), forme une partie de la seconde structure de cloisonnement (114), et **en ce que**, au second étage (104), ladite paroi latérale (121) dudit puits central (120) s'ouvre sur chacun des secteurs angulaires d'injection (A111) afin d'alimenter en fluide entrant (101) chacune des alvéoles d'injection (111), qui sont réparties en étoile autour dudit puits central (120).

4. Dispositif selon la revendication 3 **caractérisé en ce que** la seconde structure de cloisonnement (114) comprend un plancher (123) qui marque la limite entre le premier étage (103) et le second étage (104), et **en ce que**, au premier étage (103), la chambre d'échappement (106) s'étend autour du puits central (120), à l'aplomb axial de la bande d'implantation (113) des alvéoles d'injection (111) et des alvéoles d'extraction (112) du second étage (104), et sur une étendue azimutale autour de l'axe central (Z100) qui permet à ladite chambre d'échappement (106) de couvrir tous les secteurs angulaires d'extraction (A112), avec lesquels ladite chambre d'échappement (106) communique au moyen de découpes (124) qui sont pratiquées dans le plancher (123) dans chacun des secteurs angulaires d'extraction (A112).

5. Dispositif selon l'une des revendications précédentes **caractérisé en ce que**, au premier étage (103), la chambre d'échappement (106) entoure la chambre d'admission (105) sur au moins 180 degrés, voire au moins 270 degrés, autour de l'axe central (Z100).

6. Dispositif selon l'une des revendications précédentes **caractérisé en ce qu'**il comporte un noyau (125) comprenant, de préférence d'un seul tenant, la première structure de cloisonnement (110) et la seconde structure de cloisonnement (114), et **en ce que** ledit noyau est inséré dans un socle (30) creux qui comporte d'une part un fût (30B) qui coopère de façon étanche avec le noyau (125) afin de former, tout autour de l'axe central (Z100), une paroi latérale qui marque la limite radialement externe des chambres d'admission (105) et d'échappement (106) du premier étage (103), et des alvéoles d'injection (111) et d'extraction (112) du second étage (104), et d'autre part un plateau terminal (30A), normal à l'axe central (Z100), dont une première face (30A_1) coopère en contact étanche avec l'extrémité axiale de la seconde structure de cloisonnement (114) qui se situe axialement à l'opposé du premier étage (103), de sorte à former la limite axiale des alvéoles d'injection (111) et d'extraction (112), et dont une seconde face (30A_2), axialement opposée, forme une paroi de la zone de travail (20), ledit plateau terminal (30A) présentant, en vis-à-vis des alvéoles (111, 112), une pluralité de trous qui traversent axialement ledit plateau terminal (30A) depuis la première face (30A_1) jusqu'à la seconde face (30A_2) afin de former, sur la seconde face (30A_2), les points d'injection (46) et les points d'extraction (47) de la zone de travail (20).

7. Dispositif selon la revendication 6 **caractérisé en ce que** les points d'injection (46) et les points d'extraction (47) de la zone de travail (20) se situent dans une zone périphérique (115) du plateau terminal (30A) qui est comprise, en projection dans un plan normal à l'axe central (Z100), entre une limite radialement externe (115_out) qui correspond au bord latéral du noyau (125), considéré selon une direction radiale à l'axe central (Z100), et une limite radialement interne (115_in) située à une distance, considérée selon la même direction radiale, qui est égale ou supérieure à 70%, de préférence égale ou supérieure à 80%, et par exemple comprise entre 85% et 95%, de la distance (R104) qui sépare ledit bord latéral du noyau (125) dudit axe central (Z100).

8. Module (50) de confinement destiné à délimiter une zone de travail (20) et à placer ladite zone de travail sous une atmosphère contrôlée, ledit module (50) étant **caractérisé en ce qu'**il comprend un dispositif répartiteur de fluide (100) selon la revendication 6 ou la revendication 7, ainsi qu'une chemise (31) qui forme un anneau fermé autour de l'axe central (Z100) et qui s'étend axialement en saillie à partir du plateau terminal (30A) du socle (30), ainsi qu'un couvercle (32) qui ferme la chemise (31) à l'opposé axialement du plateau terminal (30A) du socle, de sorte à former une cavité fermée qui est délimitée par la chemise (31), par le couvercle (32) et par le plateau terminal (30A) du socle et qui forme la zone de travail (20), zone de travail (20) dont l'atmosphère est contrôlable en créant dans ladite cavité une circulation d'un fluide (101, 102) gazeux qui est injecté dans ladite cavité par les points d'injection (46) prévus dans le socle (30) puis évacué de ladite cavité par les points d'extraction (47) prévus dans le socle (30).

9. Module (50) de confinement selon la revendication 8 **caractérisé en ce que** la chemise (31) est emboîtée sur le fût (30) dudit module (50) et montée coulissante par rapport audit fût (30) selon l'axe central (Z100), de manière à pouvoir saillir axialement par rapport au plateau terminal (30A) de façon télescopique.

10. Machine (1) d'impression tridimensionnelle **caractérisée en ce qu'**elle comprend un module (50) de confinement selon l'une des revendications 8 ou 9, ainsi qu'une buse (6) d'injection qui traverse le couvercle (32) du module à travers un orifice d'insertion (22) prévu à cet effet dans ledit couvercle (32), et qui est agencée pour déposer un matériau d'impression (7) en couches successives dans la cavité du module formant la zone de travail (20) afin de générer une pièce (4) dans ladite cavité.

## Patentansprüche

1. Fluidausgabevorrichtung (100), die dazu bestimmt ist, mit einem Arbeitsbereich (20) verbunden zu sein, um ein einströmendes Fluid (101) in den Arbeitsbereich (20) einspritzen und ein ausströmendes Fluid (102) aus dem Arbeitsbereich (20) abführen zu können, wobei die Fluidausgabevorrichtung entlang einer Mittelachse (Z100) nacheinander aufweist:
i) eine erste Verbindungsstufe (103), die mit einer Einlasskammer (105), die dazu bestimmt ist, das für den Arbeitsbereich (20) zu der Ausgabevorrichtung (100) gelangende einströmende Fluid (101) zu empfangen, und mit einer Auslasskammer (106) versehen ist, die dazu bestimmt ist, das ausströmende Fluid (102) aus dem Arbeitsbereich (20) zu sammeln, um dem ausströmenden Fluid (102) zu ermöglichen, die Ausgabevorrichtung (100) zu verlassen, wobei die Einlass- (105) und Auslasskammer (106) innerhalb eines ersten axialen Bereichs (H103), welcher der Einlass- und Auslasskammer (105, 106) gemeinsam ist, zusammen vorliegen und gleichzeitig durch eine erste Trennstruktur (110) voneinander getrennt sind,
ii) dann eine zweite Ausgabestufe (104), die einerseits eine Vielzahl von Einspritzzellen (111) umfasst, die alle mit der Einlasskammer (105) kommunizieren und die dazu bestimmt sind, jeweils an mehrere verschiedene, in dem Arbeitsbereich (20) vorgesehene Einspritzpunkte (46) angeschlossen zu sein, und andererseits eine Vielzahl von Abführungszellen (112), die alle mit der Auslasskammer (106) kommunizieren und die dazu bestimmt sind, jeweils an mehreren getrennten, in dem Arbeitsbereich vorgesehenen Abführungspunkten (47) angeschlossen zu sein, wobei die Einspritzzellen (111) und die Abführungszellen (112) innerhalb eines zweiten axialen Bereichs (H104), welcher den Einspritz- und Abführungszellen gemeinsam ist, zusammen vorliegen und wobei die Einspritzzellen (111) und Abführungszellen (112) abwechselnd miteinander um die Mittelachse (Z100) in einer ringförmigen Zone (113), sogenanntem "Einbettungsband" (113), verteilt sind, das entlang des Umfangs (104L) der zweiten Stufe (104) verläuft und innerhalb dessen die Zellen (111, 112) durch eine zweite Trennstruktur (114) voneinander getrennt sind, die das Einbettungsband (113) in eine Folge ebenso vieler benachbarter Winkelsektoren (A111, A112) unterteilt, die azimutal um die Mittelachse (Z100) aufeinanderfolgen und so eine Abwechslung von Einspritzwinkelsektoren (A111), von denen jeder von einer Einspritzzelle (111) eingenommen wird und sich gegenüber einem oder mehreren der Einspritzpunkte (46) des Arbeitsbereichs (20) befindet, und Abführungswinkelsektoren (A112) bilden, von denen jeder von einer Abführungszelle (112) eingenommen wird und sich gegenüber einem oder mehreren der Abführungspunkte (47) des Arbeitsbereichs (20) befindet.

2. Vorrichtung nach Anspruch 1, **dadurch gekennzeichnet, dass** die erste Trennstruktur (110) und die zweite Trennstruktur (114) in einem Stück miteinander gebildet sind.

3. Vorrichtung nach Anspruch 1 oder 2, **dadurch gekennzeichnet, dass** die Einlasskammer (105) einen zentralen Schacht (120) bildet, der sich von der ersten Stufe (103) bis zu der zweiten Stufe (104) erstreckt und der um die Mittelachse (Z100) herum von einer Seitenwand (121) begrenzt wird, die in der ersten Stufe (103) einen Teil der die Einlasskammer (105) von der Auslasskammer (106) trennenden ersten Trennstruktur (110) bildet und in der zweiten Stufe (104) einen Teil der zweiten Trennstruktur (114) bildet, und dass sich in der zweiten Stufe (104) die Seitenwand (121) des zentralen Schachts (120) über jedem der Einspritzwinkelsektoren (A111) öffnet, um jede der Einspritzzellen (111), die sternförmig um den zentralen Schacht (120) herum verteilt sind, mit einströmendem Fluid (101) zu versorgen.

4. Vorrichtung nach Anspruch 3, **dadurch gekennzeichnet, dass** die zweite Trennstruktur (114) einen Boden (123) aufweist, der die Grenze zwischen der ersten Stufe (103) und der zweiten Stufe (104) markiert, und dass sich in der ersten Stufe (103) die Auslasskammer (106) um den zentralen Schacht (120) herum, axial senkrecht zu dem Einbettungsband (113) der Einspritzzellen (111) und der Abführungszellen (112) der zweiten Stufe (104) und über eine azimutale Ausdehnung um die Mittelachse (Z100) herum erstreckt, die es der Auslasskammer (106) ermöglicht, alle Abführungswinkelsektoren (A112) abzudecken, mit denen die Auslasskammer (106) mittels Ausschnitten (124) kommuniziert, die in dem Boden (123) in jedem der Abführungswinkelsektoren (A112) ausgebildet sind.

5. Vorrichtung nach einem der vorhergehenden Ansprüche, **dadurch gekennzeichnet, dass** in der ersten Stufe (103) die Auslasskammer (106) die Einlasskammer (105) über mindestens 180 Grad oder sogar mindestens 270 Grad um die Mittelachse (Z100) herum umgibt.

6. Vorrichtung nach einem der vorhergehenden Ansprüche, **dadurch gekennzeichnet, dass** sie einen Kern (125) umfasst, der vorzugsweise in einem Stück die erste Trennstruktur (110) und die zweite Trennstruktur (114) aufweist, und dass der Kern in einen hohlen Sockel (30) eingesetzt ist, der einerseits einen Schaft (30B), der abdichtend mit dem Kern (125) zusammenwirkt, um ganz um die Mittelachse (Z100) herum eine Seitenwand zu bilden, welche die radial äußere Grenze der Einlass- (105) und Auslasskammer (106) der ersten Stufe (103) und der Einspritz- (111) und Abführungszellen (112) der zweiten Stufe (104) markiert, und andererseits eine Endplatte (30A) senkrecht zu der Mittelachse (Z100) umfasst, von der eine erste Fläche (30A_1) in dichtem Kontakt mit dem axialen Ende der zweiten Trennstruktur (114) zusammenwirkt, die sich axial gegenüber der ersten Stufe (103) befindet, um die axiale Grenze der Einspritzzellen (111) und Abführungszellen (112) zu bilden, und von der eine zweite, axial gegenüberliegende Fläche (30A_2) eine Wand des Arbeitsbereichs (20) bildet, wobei die Endplatte (30A) gegenüber den Zellen (111, 112) eine Vielzahl von Löchern aufweist, welche die Endplatte (30A) von der ersten Fläche (30A_1) aus bis zu der zweiten Fläche (30A_2) axial durchdringen, um auf der zweiten Fläche (30A_2) die Einspritzpunkte (46) und die Abführungspunkte (47) des Arbeitsbereichs (20) zu bilden.

7. Vorrichtung nach Anspruch 6, **dadurch gekennzeichnet, dass** sich die Einspritzpunkte (46) und die Abführungspunkte (47) des Arbeitsbereichs (20) in einer Randzone (115) der Endplatte (30A) befinden, die in der Projektion in einer zur Mittelachse (Z100) senkrechten Ebene zwischen einer radial äußeren Grenze (115_out), die, in einer Richtung radial zur Mittelachse (Z100) betrachtet, der Seitenkante des Kerns (125) entspricht, und einer radial inneren Grenze (115_in) liegt, die, in der gleichen radialen Richtung betrachtet, sich in einem Abstand befindet, der gleich oder größer als 70%, vorzugsweise gleich oder größer als 80% und beispielsweise zwischen 85% und 95% des Abstands (R104) ist, der die Seitenkante des Kerns (125) von der Mittelachse (Z100) trennt.

8. Aufnahmemodul (50), das dazu bestimmt ist, einen Arbeitsbereich (20) abzugrenzen und den Arbeitsbereich unter eine gesteuerte Atmosphäre zu stellen, wobei das Modul (50) **dadurch gekennzeichnet ist, dass** es eine Fluidausgabevorrichtung (100) nach Anspruch 6 oder Anspruch 7 sowie einen Mantel (31), der einen um die Mittelachse (Z100) geschlossenen Ring bildet und der sich axial vorspringend von der Endplatte (30A) des Sockels (30) erstreckt, sowie einen Deckel (32) aufweist, der den Mantel (31) auf der axial gegenüberliegenden Seite der Endplatte (30A) des Sockels verschließt, um einen geschlossenen Hohlraum zu bilden, der durch den Mantel (31), durch den Deckel (32) und durch die Endplatte (30A) des Sockels begrenzt wird und der den Arbeitsbereich (20) bildet, wobei die Atmosphäre des Arbeitsbereichs (20) steuerbar ist, indem in dem Hohlraum eine Zirkulation eines gasförmigen Fluids (101, 102) geschaffen wird, das über die in dem Sockel (30) vorgesehenen Einspritzpunkte (46) in den Hohlraum eingespritzt und dann über die in dem Sockel (30) vorgesehenen Abführungspunkte (47) aus dem Hohlraum abgeleitet wird.

9. Aufnahmemodul (50) nach Anspruch 8, **dadurch gekennzeichnet, dass** der Mantel (31) auf den Schaft (30) des Moduls (50) aufgesteckt und in Bezug auf den Schaft (30) entlang der Mittelachse (Z100) verschiebbar montiert ist, um in Bezug auf die Endplatte (30A) teleskopartig axial vorspringen zu können.

10. Gerät (1) für dreidimensionalen Druck, **dadurch gekennzeichnet, dass** es ein Aufnahmemodul (50) nach einem der Ansprüche 8 oder 9 sowie eine Einspritzdüse (6) aufweist, die den Deckel (32) des Moduls durch eine zu diesem Zweck in dem Deckel (32) vorgesehene Einführöffnung (22) durchdringt und die angeordnet ist, um ein Druckmaterial (7) in aufeinanderfolgenden Schichten in dem den Arbeitsbereich (20) bildenden Hohlraum des Moduls aufzubringen, um ein Teil (4) in diesem Hohlraum zu erzeugen.

## Claims

1. Fluid dispensing device (100) intended to be connected to a work zone (20) in order to be able to inject an incoming fluid (101) into said work zone (20), and extract an outgoing fluid (102) from said work zone (20), said fluid dispensing device comprising, in succession along a central axis (Z100):
i) a first connection stage (103), which is provided with an intake chamber (105), intended to receive the incoming fluid (101) which arrives at the dispensing device (100) intended for the work zone (20), and an evacuation chamber (106), intended to collect the outgoing fluid (102) originating from the work zone (20) to allow said outgoing fluid (102) to leave the dispensing device (100), said intake (105) and evacuation (106) chambers coexisting within a first axial range (H103) which is common to said intake and evacuation chambers (105, 106), while being separated from one another by a first partitioning structure (110),
ii) then a second dispensing stage (104), which comprises, on the one hand, a plurality of injection cells (111) which all communicate with the intake chamber (105) and which are intended to be coupled respectively to several distinct injection points (46) provided in the work zone (20), and, on the other hand, a plurality of extraction cells (112) which all communicate with the evacuation chamber (106) and which are intended to be coupled respectively to several distinct extraction points (47) provided in the work zone, the injection cells (111) and the extraction cells (112) coexisting in a second axial range (H104) which is common to said injection and extraction cells, and said injection cells (111) and extraction cells (112) being distributed alternately with one another about the central axis (Z100), in an annular zone (113) called "implantation band" (113) which runs along the circumference (104L) of the second stage (104) and within which said cells (111, 112) are separated from one another by a second partitioning structure (114) which subdivides said implantation band (113) into a succession of as many adjacent angular segments (A111, A112), which follow one another in azimuth about the central axis (Z100) and which thus form an alternation of injection angular segments (A111), each of which is occupied by an injection cell (111) and situated facing one or more of the injection points (46) of the work zone (20), and of extraction angular segments (A112), each of which is occupied by an extraction cell (112) and situated facing one or more of the extraction points (47) of the work zone (20).

2. Device according to Claim 1, **characterised in that** the first partitioning structure (110) and the second partitioning structure (114) are formed in a single piece with one another.

3. Device according to Claim 1 or 2, **characterised in that** the intake chamber (105) forms a central well (120) which extends from the first stage (103) to the second stage (104) and which is delimited, about the central axis (Z100), by a lateral wall (121) which, at the first stage (103), forms a part of the first partitioning structure (110) separating the intake chamber (105) from the evacuation chamber (106), and, at the second stage (104), forms a part of the second partitioning structure (114), and **in that**, at the second stage (104), said lateral wall (121) of said central well (120) opens onto each of the injection angular segments (A111) in order to supply incoming fluid (101) to each of the injection cells (111), which are distributed in star-fashion around said central well (120).

4. Device according to Claim 3, **characterised in that** the second partitioning structure (114) comprises a floor (123) which marks the limit between the first stage (103) and the second stage (104), and **in that**, at the first stage (103), the evacuation chamber (106) extends around the central well (120), axially plumb with the implantation band (113) of the injection cells (111) and of the extraction cells (112) of the second stage (104), and over an azimuthal extent about the central axis (Z100) which allows said evacuation chamber (106) to cover all the extraction angular segments (A112), with which said evacuation chamber (106) communicates by means of cutouts (124) which are formed in the floor (123) in each of the extraction angular segments (A112).

5. Device according to one of the preceding claims, **characterised in that**, at the first stage (103), the evacuation chamber (106) surrounds the intake chamber (105) over at least 180 degrees, even at least 270 degrees, about the central axis (Z100).

6. Device according to one of the preceding claims, **characterised in that** it comprises a core (125) comprising, preferably in a single piece, the first partitioning structure (110) and the second partitioning structure (114), and **in that** said core is inserted into a hollow plinth (30) which comprises, on the one hand, a stock (30B) which cooperates tightly with the core (125) in order to form, all about the central axis (Z100), a lateral wall which marks the radially outer limit of the intake (105) and evacuation (106) chambers of the first stage (103), and injection (111) and extraction (112) cells of the second stage (104), and, on the other hand, a terminal plate (30A), normal to the central axis (Z100), of which a first face (30A_1) cooperates in tight contact with the axial end of the second partitioning structure (114) which is situated axially opposite the first stage (103), so as to form the axial limit of the injection (111) and extraction (112) cells, and of which a second face (30A_2), axially opposite, forms a wall of the work zone (20), said terminal plate (30A) having, facing the cells (111, 112), a plurality of holes which pass axially through said terminal plate (30A) from the first face (30A_1) to the second face (30A_2) in order to form, on the second face (30A_2), the injection points (46) and the extraction points (47) of the work zone (20).

7. Device according to Claim 6, **characterised in that** the injection points (46) and the extraction points (47) of the work zone (20) are situated in a peripheral zone (115) of the terminal plate (30A) which is included, in projection in a plane normal to the central axis (Z100), between a radially outer limit (115_out) which corresponds to the lateral edge of the core (125), considered in a direction radial to the central axis (Z100), and a radially inner limit (115_in) situated at a distance, considered in the same radial direction, which is equal to or greater than 70%, preferably equal to or greater than 80%, and for example between 85% and 95%, of the distance (R104) which separates said lateral edge of the core (125) from said central axis (Z100).

8. Containment module (50) intended to delimit a work zone (20) and to place said work zone in a controlled atmosphere, said module (50) being **characterised in that** it comprises a fluid dispensing device (100) according to Claim 6 or Claim 7, as well as a sleeve (31) which forms a closed ring about the central axis (Z100) and which extends axially protruding from the terminal plate (30A) of the plinth (30), as well as a cover (32) which closes the sleeve (31) axially opposite the terminal plate (30A) of the plinth, so as to form a closed cavity which is delimited by the sleeve (31), by the cover (32) and by the terminal plate (30A) of the plinth and which forms the work zone (20), a work zone (20) whose atmosphere can be controlled by creating in said cavity a circulation of a gaseous fluid (101, 102) which is injected into said cavity by the injection points (46) provided in the plinth (30) then evacuated from said cavity by the extraction points (47) provided in the plinth (30).

9. Containment module (50) according to Claim 8, **characterised in that** the sleeve (31) is fitted onto the stock (30) of said module (50) and mounted to slide with respect to said stock (30) along the central axis (Z100), so as to be able to protrude axially with respect to the terminal plate (30A) telescopically.

10. Three-dimensional printing machine (1), **characterised in that** it comprises a containment module (50) according to one of Claims 8 and 9, as well as an injection nozzle (6) which passes through the cover (32) of the module through an insertion orifice (22) provided for this purpose in said cover (32), and which is arranged to deposit a printing material (7) in successive layers in the cavity of the module forming the work zone (20) in order to generate a piece (4) in said cavity.
